# EUROPÄISCHE PATENTSCHRIFT

(11) **EP 1 038 436 B1**
(45) Veröffentlichungstag und Bekanntmachung des Hinweises auf die Patenterteilung: **02.04.2003**
(21) Anmeldenummer: 00101544.5
(22) Anmeldetag: 27.01.2000
(51) Int. Cl.: A01K 63/04

(54) **Vorrichtung zum Filtern eines Gewässers**
Water filtering device
Dispositif à filtrer un plan d'eau

(30) Priorität: 29.01.1999 DE 29901538 U
(43) Veröffentlichungstag der Anmeldung: 27.09.2000
(73) Patentinhaber: Held GmbH, 75050 Gemmingen (DE); Minnova Mineralien-Handelsgesellschaft m.b.H., 8501 Lieboch (AT)
(72) Erfinder: Klement, Arnold, Mag., 8501 Lieboch (AT)
(74) Vertreter: Müller, Hans, Dipl.-Ing.

(56) Entgegenhaltungen:
- US-A- 4 379 050

## Beschreibung

### TECHNISCHES GEBIET

Die Erfindung betrifft eine Vorrichtung zum Filtern eines Gewässers, wie zum Beispiel eines Schwimm-, Pflanzen- oder Fischteiches. Mit der Filteranordnung soll die Wasserqualität des betreffenden Gewässers optimiert werden. So sollen das Entstehen von makroskopischen Algen weitestgehend verhindert und eine Schlickbildung auf dem Gewässerboden möglichst beschränkt werden. Das Wasser soll einem guten Pflanzenwuchs förderlich sein und Fischen ein störungsfreies Leben ermöglichen.

### STAND DER TECHNIK

Eine bekannte Filtervorrichtung der eingangs genannten Art besitzt eine Pumpe, die leitungsmäßig mit einem an der Oberfläche des Gewässers befindlichen Skimmer verbunden ist. Von diesem Skimmer wird das verschmutzte Oberflächenwasser angesaugt und über eine von der Pumpe wegführende Druckleitung zu einem Verteilschacht gepumpt. Aus dem Verteilerschacht strömt das von der Pumpe kommende Wasser in das Gewässer hinein. Bekannt ist es in diesem Zusammenhang, den Verteilerschacht im Bodengrund des Gewässers anzuordnen. Auf dem Verteilerschacht können verschiedene Kies- und Sandschichten angeordnet werden. Beim Herausströmen des Wassers aus dem Verteilerschacht strömt dieses Wasser von unten nach oben durch die Gesteinsschichten hindurch. Dabei findet eine Reinigungswirkung dieses Wassers statt. Das vom Skimmer angesaugte, verschmutzte Oberflächenwasser kann auf diese Weise gefiltert in das Gewässer zurückgeleitet werden.

Über eine weitere Leitung zwischen der Saugpumpe und dem Verteilerschacht kann ein Rückspülbetrieb und damit ein Reinigungsvorgang des Verteilerschachtes durchgeführt werden. Dieses im Rückspülbetrieb vom Verteilerschacht angesaugte Wasser wird über eine separate Leitung von der Saugpumpe durch einen Abflusskanal aus dem Gewässer herausgeleitet. Die dadurch entstehende Fehlmenge an Wasser wird durch einen separaten Zufluss von frischem Wasser ausgeglichen.

Eine derartige Reinigungsvorrichtung hat sich in der Praxis bewährt. Aufgrund der Verschlammungsgefahr des Verteilerschachtes ist eine oftmalige Reinigung desselben erforderliche. Infolge der relativ umständlichen und schwierigen Zugänglichkeit dieses Verteilerschachtes, der oftmals an den tiefsten Stellen zumindest aber weit entfernt vom Ufer im Gewässer plaziert ist, stellt seine Reinigung einen erheblichen Aufwand dar. Als weiterer Nachteil erweist sich die Anordnung einer zusätzlich erforderlichen Rückspülleltung zwischen Verteilerschacht und Saugpumpe. Das Anordnen dieser Rückspülleitung ist wirtschaftlich keineswegs vernachlässigbar, insbesondere dann, wenn mehrere Verteilerschächte in einem Gewässer angeordnet sind. Letzteres ist vorteilhaft, um eine großflächigere Einleitung von gesäubertem Wasser in ein Gewässer zu ermöglichen.

### DARSTELLUNG DER ERFINDUNG

Ausgehend von diesem Stand der Technik liegt der Erfindung die Aufgabe zugrunde, eine verbesserte Vorrichtung zum Filtern eines Gewässers anzugeben.

Diese Erfindung ist durch Merkmale des Anspruchs 1 gegeben. Weiterbildungen sind Gegenstand von Unteransprüchen.

Die erfindungsgemäße Vorrichtung zeichnet sich durch eine Verbindungsleitung zwischen der von der Pumpe wegführenden Druckleitung und der zur Pumpe, vom Skimmer herführenden Saugleitung. Durch diese Verbindungsleitung kann die von der Pumpe zum Filter führende Leitung als Druckleitung im Reinigungsbetrieb und darüber hinaus im Rückspülbetrieb, zusammen mit der Verbindungsleitung, als Saugleitung - je nach Stellung der in den Leitungen vorhandenen Absperrvorrichtungen - benutzt werden. Durch die Verbindungsleitung können damit viele Meter an Leitungen eingespart werden. Die Einsparung ist umso größer, je weiter die Filter von der Pumpe in einem Gewässer plaziert werden.

Damit trotz des Vorhandenseins der Verbindungsleitung ein getrennter Filter- oder Reinigungsbetrieb möglich ist, ist in der Verbindungsleitung eine Absperrvorrichtung vorhanden. Bei verschlossener Verbindungsleitung ist nur der Filterbetrieb und bei offener Verbindungsleitung nur der Reinigungsbetrieb für den oder die Filter, das heißt ein Rückspülbetrieb, möglich.

Eine andere erfindungsgemäße Vorrichtung zum Filtern eines Gewässers zeichnet sich dadurch aus, dass zumindest eine Verzweigungsvorrichtung in der zu der Filteranordnung führenden Druckleitung vorhanden ist. Diese Verzweigungsvorrichtung kann auch an der vorstehend genannten Filtervorrichtung vorgesehen werden, die die erfindungsgemäße Verbindungsleitung aufweist. Diese Verzweigungsvorrichtung der Druckleitung erlaubt es, die Druckleitung in viele einzelne Druckleitungen (Zweigleitungen) aufzuteilen. An jeder der Zweigleitungen können dann Filteranordnungen vorgesehen werden. Dadurch kann mit einer einzigen, eine Stammleitung darstellenden Druckleitung, über entsprechend viele Zweigleitungen eine großflächige Verteilung des von der Pumpe in das Gewässer zurückströmenden Wassers vorgenommen werden. An den einzelnen Enden der Zweigleitungen können dann die im Stand der Technik an sich bekannten Verteilerschächte angeordnet werden. Es ist darüber hinaus auch möglich, Rohre als Austrittskörper vorzusehen, die mit ihrer Längsachse parallel zum Boden oder zur Wand des Gewässers ausgerichtet werden können. In dem Rohr sind, um eine möglichst großflächige Verteilung des austretenden Wassers zu ermöglichen, Durchbrüche vorgesehen. Diese Durchbrüche können in einfacher Weise durch Schlitze oder Löcher hergestellt werden. Mit Hilfe entsprechend vieler Rohre kann eine entsprechend große Gewässerzone mit einem Bodenfilter versehen werden.

Durch Absperreinrichtungen für die einzelnen Zweigleitungen beziehungsweise für die einzelnen Rohre besteht die Möglichkeit, die Rohre gezielt rückzuspülen und damit zu reinigen. Die Absperrmöglichkeit ist umso wichtiger, je ungleicher sich die Rohre mit Schmutz zusetzen können. Ohne die Absperrmöglichkeit könnte nämlich ansonsten ein stark verschmutztes Rohr nicht durch Rückspülen gereinigt werden, solange andere, weniger verschmutzte Rohre betriebsgemäß gleichzeitig vorhanden sind.

Weitere Merkmale und Vorteile der Erfindung sind den in den Unteransprüchen ferner angegebenen Merkmalen sowie dem nachstehenden Ausführungsbeispiel zu entnehmen. Es zeigen:
- Fig. 1: eine schematische Leitungsanordnung für eine erfindungsgemäße Filtervorrichtung eines Gewässers,
- Fig. 2: eine entsprechende Darstellung für eine im Stand der Technik bekannte Filtervorrichtung,
- Fig. 3: eine Ansicht einer in einem Teich verlegten Filtervorrichtung, mit der in Fig. 1 dargestellten Leitungsanordnung, und
- Fig. 4: einen schematisierten Querschnitt durch den Schichtaufbau in dem Teich im Bereich der Filteranordnung.

### WEGE ZUM AUSFÜHREN DER ERFINDUNG

Eine Vorrichtung 10 zum Filtern des Wassers eines Teiches 12 besitzt einen Skimmer 14. Über den Skimmer 14 kann verschmutztes Oberflächenwasser des Teiches 12 angesaugt werden. Der Skimmer 14 ist über eine Saugleitung 16 mit einer Saugpumpe 18 verbunden. Über ein Absperrventil 20 kann die Saugleitung 16 verschlossen werden.

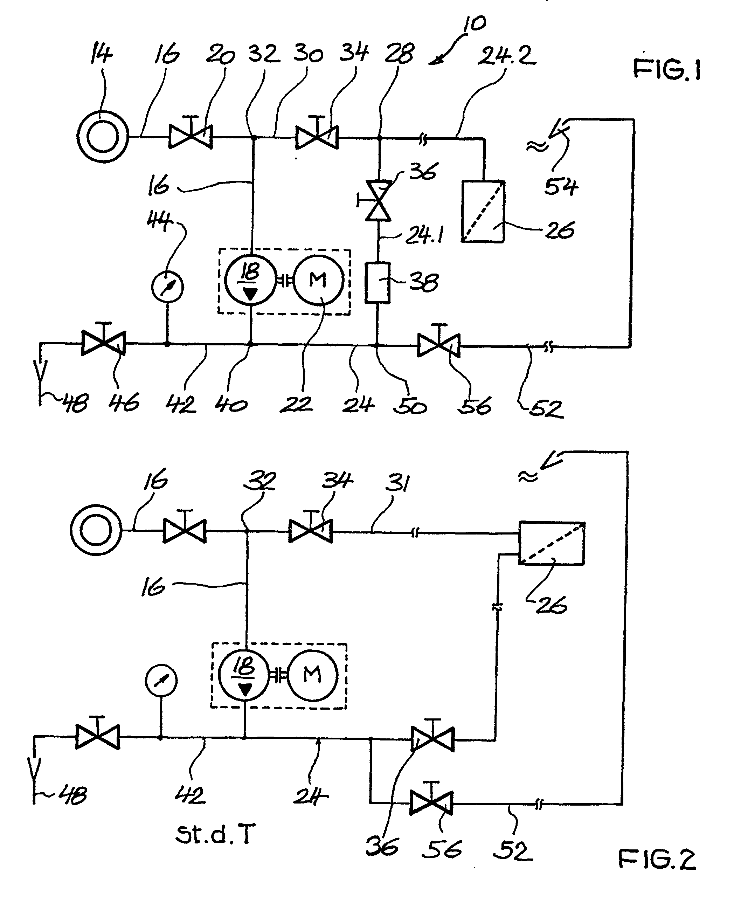

Von der Pumpe 18, die über einen geeigneten Motor 22 angesteuert wird, führt eine Druckleitung 24 zu einem in Fig. 1 schematisch dargestellten Filter 26. Aus dem Filter 26 kann das von dem Skimmer 14 angesaugte Oberflächenwasser wieder zurück in den Teich 12 eingespeist werden.

An der Stelle 28 der Druckleitung 24 zweigt eine Verbindungsleitung 30 ab, die an der Stelle 32 in die Saugleitung 16 zurückführt. Die Verbindungsleitung 30 lässt sich über ein Absperrventil 34 verschließen. Über ein weiteres Absperrventil 36 lässt sich der pumpenseitige Leitungsbereich 24.1 vom filterseitigen Leitungsbereich 24.2 abtrennen. Schließlich ist noch ein Durchflussmesser 38 im pumpenseitigen Leitungsbereich 24.1 der Druckleitung 24 eingebaut.

An einer nahe bei der Pumpe 18 befindlichen Stelle 40 der Druckleitung 24 zweigt eine Abflussleitung 42 ab. An dieser Abflussleitung 42 ist ein Manometer 44 angeschlossen. Über ein Absperrventil 46 lässt sich diese Abflussleitung 42 verschließen. Die Abflussleitung 42 führt zu einem in der Zeichnung nicht näher dargestellten Abflusskanal 48.

An dem pumpenseitigen Leitungsbereich 24.1 der Druckleitung 24 ist an der Stelle 50 eine weitere Leitung 52 angeschlossen. Diese Leitung 52 führt zu einer weiteren Einleitungsstelle, die im vorliegenden Fall als Quelle 54 bezeichnet wird. Diese Quelle 54 kann zum Beispiel in Gestalt eines sogenannten Quellensteins oder als Fontäne oder dergleichen ausgebildet sein. Durch die Leitung 52 kann daher vom Skimmer 14 angesaugtes Wasser über die Quelle 54 in den Teich 12 zurückgeführt werden.

Bei Betrieb der Vorrichtung 10 im sogenannten Filterbetrieb sind die Absperrventile 20 beziehungsweise 36 in der Saugleitung 16 beziehungsweise Druckleitung 24 offen. Die anderen in Fig. 1 dargestellten Absperrventile, nämlich das in der Abflussleitung 42 befindliche Absperrventil 46, das in der Verbindungsleitung 30 befindliche Absperrventil 34 und das in der Leitung 52 befindliche Absperrventil 56, sind geschlossen. Dadurch strömt das vom Skimmer 14 angesaugte Wasser durch die Leitung 16, den pumpenseitigen Leitungsbereich 24.1 und den filterseitigen Leitungsbereich 24.2 zum Filter 26, wo es in den Teich 12 wieder eintritt. Sofern das Absperrventil 56 geöffnet wird, kann gleichzeitig Wasser auch durch die Leitung 52 über die Quelle 54 in den Teich 12 zurückgeführt werden.

Im Reinigungsbetrieb, in dem die Filter 26 gereinigt werden sollen, wird von der Saugpumpe 18 Wasser über den filterseitigen Leitungsbereich 24.2 vom Filter 26 angesaugt. Die filterseitige Leitungsverbindung 24.2 ist leitungsmäßig verbunden mit der jetzt offenen Verbindungsleitung 30. Das in dem pumpenseitigen Leitungsbereich 24.1 vorhandene Absperrventil 36 ist geschlossen.Dadurch strömt das vom Filter 26 angesaugte Wasser über die Verbindungsleitung 30 in die Saugleitung 16 und von dort zur Pumpe 18. Das in der Saugleitung 16 befindliche Absperrventil 20 ist geschlossen. Durch öffnen des in der Abflussleitung 42 befindlichen Absperrventils 46 und Schließen der in der Leitung 52 und in dem pumpenseitigen Leitungsbereich 24.1 befindlichen Absperrventile 56 und 36 wird das vom Filter 26 angesaugte Wasser über die Abflussleitung 42 in den Abflusskanal 48 geleitet und damit aus dem Teich 12 herausgeleitet. Das in der Abflussleitung 42 befindliche Manometer 44 zeigt durch unterschiedlich hohe Leitungsdrücke an, wie stark der Filter 26 verschmutzt ist. Je verschmutzter der Filter 26 ist, umso höher ist der vom Manometer 44 angezeigte Druck.

Der im pumpenseitigen Leitungsbereich 24.1 eingebaute Durchflussmesser 38 zeigt an, wieviel Wasser zu den Filtern 26 geleitet wird. Von der Größe der Durchflussmenge abhängig kann dann entschieden werden, von Filterbetrieb auf Reinigungsbetrieb umzustellen.

In der Leitungsverbindung nach Fig. 2 ist statt der Verbindungsleitung 30 eine separate Rückspülleitung 31 zwischen dem Filter 26 und der Stelle 32 der Saugleitung 16 vorhanden. Im Reinigungsbetrieb wird von der Pumpe 18 Wasser vom Filter 26 durch die Rückspülleitung 31 angesaugt. Das in der Rückspülleitung 31 befindliche Absperrventil 34 ist dabei in seiner AUF-Stellung. Dieses rückgespülte Wasser kann dann, wie im Zusammenhang mit Fig. 1 erläutert, durch eine Abflussleitung 42 in einen Abflusskanal 48 zurückgeleitet werden. Je weiter der Filter 26 von der Pumpe 18 entfernt in einem Teich 12 plaziert wird, desto länger wird auch die Rückspülleitung 31. Dem gegenüber kann die Verbindungsleitung 30 gemäß Fig. 1 extrem kurz ausgebildet werden.

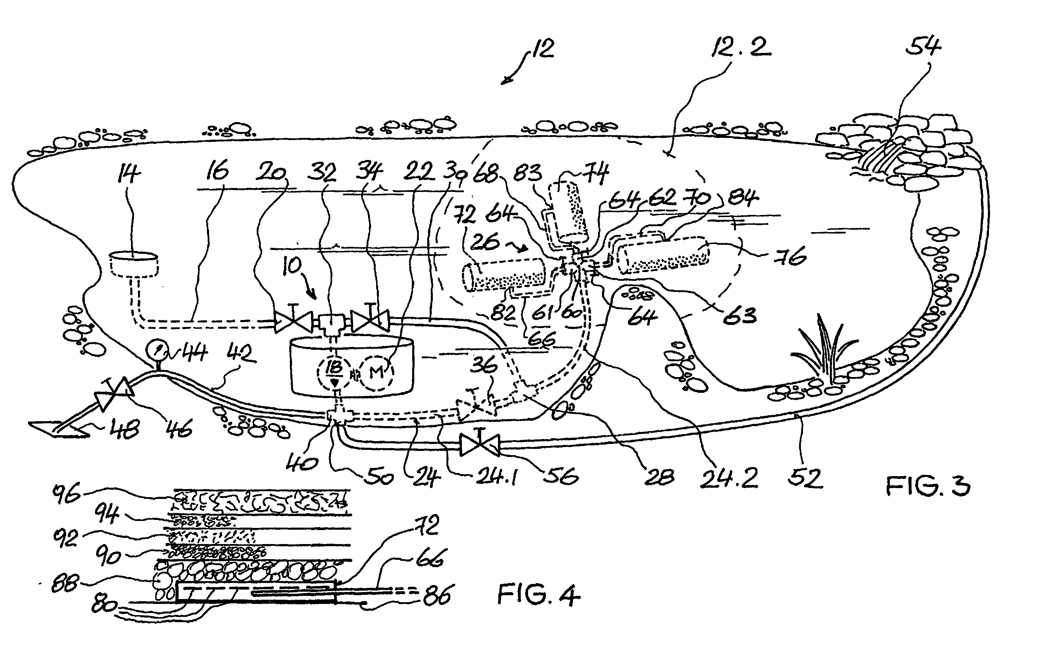

In Fig. 3 ist eine Vorrichtung 10 in Anlehnung an Fig. 1 dargestellt.

Die Filtervorrichtung 26 befindet sich am Ende des filterseitigen Leitungsbereiches 24.2. Dieser Leitungsbereich mündet in ein kreuzförmiges Verbindungsstück 60, welches eine Verzweigungsvorrichtung für die Druckleitung 24 darstellt. Dieses Verbindungsstück 60 besitzt drei Zweigstutzen 61, 62, 63. In jedem Zweigstutzen ist ein Absperrhahn 64 vorhanden.

An den Zweigstutzen 61, 62, 63 sind über Zweigleitungen 66, 68, 70 im vorliegenden Fall drei endseitig durch Kappen verschlossene Rohre 72, 74, 76 angeschlossen. In diesen Rohren sind über deren Mantel verteilt mehrere Schlitze 80 vorhanden. Das von der Pumpe 18 vom Skimmer 14 angesaugte Wasser wird über die Druckleitung 24 im Bereich des kreuzförmigen Verbindungsstückes 60 in die drei Zweigleitungen 66, 68, 70 und weiter in die drei Rohre 72, 74, 76 geleitet. Von dort tritt das Wasser durch die Schlitze 80 heraus. Dieser Leitungsfluss ist dann möglich, wenn die drei Absperrhähne 64 in den drei Zweigstutzen 61, 62, 63 in AUF-Stellung stehen. Sofern eine oder mehrere dieser Absperrhähne 64 verschlossen wird, kann eines oder mehrere der Rohre 72, 74, 76 von der Druckleitung 24 abgekoppelt werden.

Diese Möglichkeit zum Absperren der Zweigstutzen 61, 62, 63 und damit der Rohre 72, 74, 76 ist im Rückspülbetrieb wichtig. Im Rückspülbetrieb wird durch den filterseitigen Leitungsbereich 24.2 das Wasser aus den drei Rohren 72, 74, 76 angesaugt. Bei ungleichem Verschmutzungsgrad der drei Rohre 72, 74, 76 würde das Wasser nur aus dem am wenigsten verunreinigten Rohr angesaugt werden, da sich das Wasser den Weg des geringsten Widerstandes wählt. Bei einem stark verschmutzten Rohr werden die entsprechend anderen, nicht an dessen Zweigleitung vorhandenen Absperrhähne 64 zugesperrt, so dass nur dieses stark verschmutzte Rohr leitungsmäßig mit dem filterseitigen Leitungsbereich 24.2 verbunden ist.Durch nacheinander Absperren der drei Rohre lassen sich so alle Rohre nacheinander durch Rückspülen reinigen.

Vorteilhafterweise wird, wie in Fig. 3 angedeutet, das kreuzförmige Verbindungsstück 60 oder eine sonstige Verzweigungsvorrichtung in der Nähe des Ufers angeordnet. Dadurch wird ein leichter Zugang zu den Absperrhähnen 64 ermöglicht, was für den Reinigungsbetrieb (Rückspülbetrieb) von großem Vorteil ist. Bei Schwimmteichen könnte zum Beispiel eine Verzweigungsvorrichtung auch an Badestegen oder sonstigen, ins Wasser hineinragenden, begehbaren Einrichtungen angebracht werden.

Im vorliegenden Fall ist der Bereich der drei Rohre 72, 74, 76 auf einer Teichfolie 86 plaziert. Oberhalb des Rohres ist eine Filterzone ausgebildet. Diese besteht aus einer Kiesschicht 88 mit Steingrößen im Durchmesser von 16 und 32 mm (Millimeter) Durchmesser. Darüber ist eine Kiesschicht 90 mit Steinen im Durchmesser von 4 und 8 mm angeordnet. Wieder darüber ist eine Filtergranulat-Schicht 92 vorhanden. Das Filtergranulat ist ein Ionen austauschfähiges Granulat mit hoher Mikro- und Makroporösität. Dieses Granulat sorgt für einen raschen und kontrollierten Aufbau einer langfristig aktiven und stabilen Teichbiologie. Es entzieht dem Wasser permanent organische und gelöste Verunreinigungen. Mit seiner definierten Phosphor-Aufnahmekapazität verhindert es eine Schwebealgenbildung und Wassertrübung. Es reguliert auf natürliche Weise den pH-Wert. Als Schutzschicht ist darüber eine Rundkies-Schicht 94 angeordnet. Als oberste Schichtung ist ein Deckgranulat 96 vorgesehen. Dieses kann des besseren Aussehens wegen optisch eingefärbt sein. Es vermindert das Entstehen von makroskopischen Algen insbesondere im Flachwasserbereich und in einer Seerosenzone. Im vorliegenden Fall besteht es aus Gestein mit einem Durchmesser von 16 und 32 mm.

Statt der Rohre 72, 74, 76 können auch andere Wasseraustrittsvorrichtungen vorgesehen werden. Diese Austrittsvorrichtungen können beispielsweise großflächige Filter-Vorrichtungen sein, wie sie beispielsweise in Form von sackartigen Kokosmatten bekannt sind.

Statt des einen Verbindungsstückes 60 können selbstverständlich auch mehrere derartige oder vergleichbare Verbindungsstücke 60 vorgesehen werden. Mit einer derartigen Verzweigungstechnik lässt sich ein sehr großer Bereich 12.2 eines Teiches 12 als Filterzonenbereich ausbilden.

## Patentansprüche

1. Vorrichtung (10) zum Filtern eines Gewässers (12),
- mit einer Pumpe (18),
- mit einer mit der Pumpe (18) im Filterbetrieb verbundenen Saugleitung (16) und Druckleitung (24),
- mit einer an der Druckleitung (24) anschließbaren Filteranordnung (26),
**dadurch gekennzeichnet, dass**
- die Druckleitung (24) an einer Stelle (28) über eine Verbindungsleitung (30) mit der Saugleitung (16) verbunden ist,
- eine Absperrvorrichtung (36) in der Druckleitung (24) in ihrem Bereich (24.1) zwischen der Pumpe (18) und der Stelle (28) vorhanden ist,
- eine Absperrvorrichtung (34) in der Verbindungsleitung (30) vorhanden ist.

2. Vorrichtung nach Anspruch 1,
**dadurch gekennzeichnet, dass**
- zumindest eine Verzweigungsvorrichtung (60) in der zu der Filteranordnung (26) führenden Druckleitung (24) vorhanden ist,
- an der Verzweigungsvorrichtung (60) Zweigleitungen (66, 68, 70) anschließbar sind, die mit der Filteranordnung (26) verbunden sind.

3. Vorrichtung nach Anspruch 2,
**dadurch gekennzeichnet, dass**
- jede Zweigleitung (66, 68, 70) absperrbar ist.

4. Vorrichtung nach einem der vorstehenden Ansprüche,
**dadurch gekennzeichnet, dass**
- die Verzweigungsvorrichtung (60) Einrichtungen (64) zum Absperren der Zweigleitungen (66, 68, 70) besitzt.

5. Vorrichtung nach einem der vorstehenden Ansprüche,
**dadurch gekennzeichnet, dass**
- die Filteranordnung (26) ein mit Durchbrüchen (80) versehenes Verteilerrohr (72, 74, 76) besitzt.

6. Vorrichtung nach Anspruch 5,
**dadurch gekennzeichnet, dass**
- die Durchbrüche im Mantel des Rohres (72, 74, 76) angeordnete Schlitze (80) und/oder Löcher sind.

7. Vorrichtung nach einem der vorstehenden Ansprüche,
**dadurch gekennzeichnet, dass**
- die Filteranordnung (26) einen Bereich (12.2) des Gewässers mit einer Filterzone umfasst, in der ein ionenaustauschfähiges Granulat (92) mit hoher Mikro- und Makroporösität vorhanden ist.

8. Vorrichtung nach Anspruch 7,
**dadurch gekennzeichnet, dass**
- das Granulat (92) ein natürliches Gesteinsgranulat ist.

9. Vorrichtung nach Anspruch 7 oder 8,
**dadurch gekennzeichnet, dass**
- Granulat- und Kiesschichten (88, 90, 92, 94, 96) übereinandergeschichtet vorhanden sind,
- diese Schichten von dem durch die Zuleitung zugeführten Gewässer-Wasser von unten nach oben durchströmbar sind.

10. Vorrichtung nach einem der vorstehenden Ansprüche,
**dadurch gekennzeichnet, dass**
- ein Durchflussmesser (38) in der zu der Filteranordnung (26) führenden Druckleitung (24) vorhanden ist.

11. Vorrichtung nach einem der vorstehenden Ansprüche,
**dadurch gekennzeichnet, dass**
- eine Abflussleitung (42) an der Pumpe (18) anschließbar ist,
- ein Manometer (44) in der Abflussleitung (42) vorhanden ist.

12. Vorrichtung nach Anspruch 10 oder 11,
**dadurch gekennzeichnet, dass**
- ein Durchflussmesser in der Abflussleitung vorhanden ist.

## Claims

1. Device (10) for filtering a body of water (12),
- with a pump (18),
- with a suction line (16) and delivery line (24) which are connected to the pump (18) during filtering operation,
- with a filter arrangement (26) connectable to the delivery line (24),
**characterized in that**
- the delivery line (24) is connected to the suction line (16) at a point (28) via a connecting line (30),
- a shut-off device (36) is present in the delivery line (24) in the region (24.1) of the latter between the pump (18) and the point (28),
- a shut-off device (36) is present in the connecting line (30).

2. Device according to Claim 1, **characterized in that**
- at least one branching device (60) is present in the delivery line (24) leading to the filter arrangement (26),
- branch lines (66, 68, 70) which are connected to the filter arrangement (26) are connectable to the branching device (60).

3. Device according to Claim 2, **characterized in that**
- each branch line (66, 68, 70) can be shut off.

4. Device according to one of the preceding claims,
**characterized in that**
- the branching device (60) possesses means (64) for shutting off the branch lines (66, 68, 70).

5. Device according to one of the preceding claims,
**characterized in that**
- the filter arrangement (26) possesses a distributor pipe (72, 74, 76) provided with perforations (80).

6. Device according to Claim 5, **characterized in that**
- the perforations are slots (80) and/or holes in the casing of the pipe (72, 74, 76).

7. Device according to one of the preceding claims,
**characterized in that**
- the filter arrangement (26) covers a region (12.2) of the body of water, with a filter zone in which an ion-exchangeable granulate (92) with high micro- and macro-porosity is present.

8. Device according to Claim 7, **characterized in that**
- the granulate (92) is a natural rock granulate.

9. Device according to Claim 7 or 8, **characterized in that**
- granulate and gravel layers (88, 90, 92, 94, 96) are present, layered one above the other,
- the water of the body of water which is supplied through the supply line is capable of flowing through these layers from the bottom upwards.

10. Device according to one of the preceding claims,
**characterized in that**
- a flow meter (38) is present in the delivery line (24) leading to the filter arrangement (26).

11. Device according to one of the preceding claims,
**characterized in that**
- an outflow line (42) is connectable to the pump (18),
- a manometer (44) is present in the outflow line (42).

12. Device according to Claim 10 or 11, **characterized in that**
- a flow meter is present in the outflow line.

## Revendications

1. Dispositif(10) pour filtrer un plan d'eau (12) comportant
- une pompe (18),
- une conduite de refoulement (24) et une conduite d'aspiration (16) raccordées à la pompe (18) lors de l'opération de filtrage,
- un dispositif filtrant (26) pouvant être raccordée à la conduite de refoulement (24)
**caractérisé en ce que**
- la conduite de refoulement (24) est raccordée à un endroit donné (28) à la conduite d'aspiration (16) par une conduite de raccordement (30),
- un dispositif d'arrêt (36) est disposé dans la conduite de refoulement (24) dans son voisinage (24.1) entre la pompe (18) et l'endroit donné (28),
- un dispositif d'arrêt (34) est disposé dans la conduite de raccordement (30).

2. Dispositif selon la revendication 1, **caractérisé en ce que**
- au moins un dispositif de bifurcation (60) est présent dans la conduite de refoulement (24) menant au dispositif filtrant (26),
- des conduites dérivées (66, 68, 70) qui sont reliées au dispositif filtrant (26) peuvent être raccordées au dispositif de bifurcation (60).

3. Dispositif selon la revendication 2, **caractérisé en ce que**
- chaque conduite dérivée (66, 68, 70) peut être fermée.

4. Dispositif selon l'une quelconque des revendications précédentes, **caractérisé en ce que**
- le dispositif de bifurcation (60) comporte des dispositifs (64) pour fermer les conduites dérivées (66, 68, 70).

5. Dispositif selon l'une quelconque des revendications précédentes, **caractérisé en ce que**
- le dispositif filtrant (26) comporte un tuyau de distribution (72, 74, 76) pourvu de percements (80).

6. Dispositif selon la revendication 5, **caractérisé en ce que**
- les percements de l'enveloppe du tuyau (72, 74, 76) sont des fentes (80) et/ou des trous aménagés.

7. Dispositif selon l'une quelconque des revendications précédentes, **caractérisé en ce que**
- le dispositif filtrant (26) couvre une zone (12.2) du plan d'eau avec une zone filtrante, dans laquelle se trouve un granulat pouvant échanger des ions (92) hautement macro- et micro-poreux.

8. Dispositif selon la revendication 7 **caractérisé en ce que**
- le granulat (92) est un granulat de roche naturel.

9. Dispositif selon la revendication 7 ou 8 **caractérisé en ce que**
- des couches de granulat et de gravier (88, 90, 92, 94, 96) superposées sont présentes,
- ces couches peuvent être traversées par l'eau du plan d'eau par les conduites de bas en haut.

10. Dispositif selon l'une quelconque des revendications précédentes, **caractérisé en ce que**
- un débitmètre (38) se trouve dans la conduite de refoulement (24) menant au dispositif filtrant (26).

11. Dispositif selon l'une quelconque des revendications précédentes, **caractérisé en ce que**
- une conduite de décharge (42) peut être raccordée à la pompe (18),
- un manomètre (44) se trouve dans la conduite de décharge (42).

12. Dispositif selon la revendication 10 ou 11, **caractérisé en ce que**
- un débitmètre se trouve dans la conduite de décharge.
